# EUROPEAN PATENT SPECIFICATION

(11) **EP 4 512 982 B1**
(45) Date of publication and mention of the grant of the patent: **03.12.2025**
(21) Application number: 23192702.1
(22) Date of filing: 22.08.2023
(51) Int. Cl.: E05B 81/76, H03K 17/94

(54) **CAR ACCESS ASSEMBLY WITH TWO STRAIN GAUGES ORIENTED DIFFERENTLY**
FAHRZEUGZUGANGSANORDNUNG MIT ZWEI UNTERSCHIEDLICH AUSGERICHTETEN DEHNUNGSMESSERN
ENSEMBLE D'ACCÈS POUR VOITURE AVEC DEUX JAUGES DE CONTRAINTE ORIENTÉES DIFFÉREMMENT

(43) Date of publication of application: 26.02.2025
(73) Proprietor: MINEBEA ACCESSSOLUTIONS ITALIA S.P.A., 10044 Pianezza (IT)
(72) Inventor: PIERI, Alexandre, 10044 Pianezza (IT); FRATTINI, Massimo, 10044 PIANEZZA (IT); GRAMAGLIA, Alberto, 10044 PIANEZZA (IT); BALZARINI, Luca, 10044 Pianezza (IT); WINKER, Martin, 85253 ERDWEG (DE); ARSALANE, Si Mohammed, 85253 ERDWEG (DE)
(74) Representative: Germain Maureau

(56) References cited:
- JP-A- 2016 130 392
- US-A1- 2003 101 781
- US-A1- 2014 292 004

## Description

### Field of the invention

The present invention concerns a car access assembly with two strain gauges, a main strain gauge and an additional strain, oriented differently. In particular, the additional strain gauge is oriented in an inclined manner with respect to the main strain gauge.

### Prior art

It is known to have different commands built in a car access assembly of a vehicle. Such commands can include release, lock or automatic door opening.

The car access assembly therefore includes different sensors that are linked to a controlling assembly of the vehicle. This provision is satisfactory in that different commands are available to the user in the same location.

One exemplary car access assembly is known from US 2014/292004 A1. This car access assembly comprises one strain gauge and a handle cover, which is mounted around the strain gauge, and which defines a main manual actuating area, configured for triggering the strain gauge. A further car access assembly with different strain gauges, which are directly mounted inside a handle cover, is known from JP 2016 130392 A.

However, there is a trend for a clean handle design of the car access assembly. The purpose is to have a sleek designed handle with no apparent element. Such a handle can have a wing form and be painted in glossy black color.

There is another trend to place the car access assembly in the B-pillar or C-pillar area so that the car access assembly becomes hardly visible. The B-pillar or C-pillar area are very compact and reinforced to withstand side crash impacts.

Thus, it is very challenging to integrate a car access assembly in this area of the vehicle door with the required design. Moreover, when integrating several functions in the handle, this becomes even more challenging from both the packaging point of view and the electronic point of view.

The present invention aims to solve all or some of the disadvantages mentioned above.

### Summary of the invention

For this purpose, the present invention relates to a car access assembly comprising:
a support blade extending according to a basis plane, the support blade being configured to be mounted on a structural support of a vehicle door,
a main strain gauge mounted on the support blade and configured to measure, within the basis plane, an elongation or a contraction of the main strain gauge according to a main direction,
an additional strain gauge mounted on the support blade in such a way to extend, at least partially, in an inclined manner with respect to the basis plane, the additional strain gauge being configured to measure an elongation or a contraction of the additional strain gauge, according to a secondary direction, which is not collinear with the main direction,
a handle cover configured to be mounted around the support blade, the main strain gauge and the additional strain gauge; the handle cover presenting a main actuating area configured to be manually actuated according to or parallel to the main direction for triggering the main strain gauge and an additional actuating area configured to be manually actuated according to or parallel to an additional direction, which is transverse to the main direction, for triggering the additional strain gauge.

This provision enables to easily distinguish different commands of a user that manually actuates the handle cover. Indeed, the respective orientations of the main strain gauge and the additional strain gauge facilitate the interpretation of the measured signals. There is less risk to have measured signals that could lead to a doubt of the actuating area which is really used.

Such a construction allows to downsize the car access assembly and to have the additional strain gauge in proximity from the main strain gauge even though they are measuring different user manual inputs.

According to a preferred embodiment of the invention, the handle cover is provided with a main transmission part that is in contact with the support blade in a region of the support blade which is aligned or merged with the main strain gauge location according to the main direction, the main transmission part being configured to apply a strain or load on the support blade in such a way to elongate or contract the main strain gauge according to the main direction when the main actuating area is manually actuated according to or parallel to the main direction.

This provision enables to establish a connection between the manual action of a user on the main actuating area according to the main direction and the triggering of the main stain gauge.

Indeed, as the support blade is mounted on the structural support of the vehicle door, it appears that the support blade is maintained in position by the structural support whereas the handle cover is loaded by the user hand. There is therefore a need for a cooperation between the support blade and the handle cover that facilitates the triggering of the main strain gauge to obtain a reliable command.

According to a further preferred embodiment of the invention, the main transmission part is a pin extending from the handle cover. Preferably, said pin extends transversally to the basis plane when the handle cover is mounted around the support blade.

The main transmission part can be distant from the main strain gauge according to the main direction. In this case, the main transmission part can cooperate with a face of the support blade on which is located the main strain gauge.

Alternatively, the main transmission part can cooperate with an opposed face of the support blade on the other side of the face on which the main strain gauge is located. In this case, the main transmission part can also be under the main strain gauge.

According to a preferred embodiment of the invention, the main strain gauge extends in a planar way in parallel to the basis plane.

According to a further preferred embodiment of the invention, the handle cover is provided with an additional transmission part that is in contact with the support blade in a region of the support blade which is aligned or merged with the additional strain gauge location according to the additional direction, the additional transmission part being configured to apply a strain on the support blade in such a way to elongate or contract the additional strain gauge when the additional actuating area is manually actuated according to or parallel to the additional direction.

This provision enables to link the manual action of a user on the additional actuating area according to the additional direction to the triggering of the additional stain gauge.

According to a preferred embodiment of the invention, the additional transmission part is a pin extending from the handle cover.

The additional transmission part can cooperate with the opposed face of the support blade which is on the other side of the face on which the additional strain gauge is located. In this case, the additional transmission part can also be under the additional strain gauge.

Alternatively, the additional transmission part can be distant from the additional strain gauge according to the additional direction. In this case, the additional transmission part can cooperate with the face of the support blade on which is located the additional strain gauge.

According to a preferred embodiment of the invention, the handle cover comprises an upper cover and a lower cover configured to cooperate, for example by including each a corresponding part of a snap-in mechanism.

Preferably, the upper cover includes the main transmission part and the lower cover includes the additional transmission part.

According to a preferred embodiment of the invention, the additional strain gauge extends at least partially in a curved way.

This provision enables to trigger the additional strain gauge not only according to the additional direction but also according to other directions that are tangential to the curvature of the additional strain gauge.

The perceived signal according to these other directions is more or less important depending on the curvature of the additional strain gauge.

The combined effect of the main strain gauge and the additional strain gauge is to capture three dimensional efforts and to eventually filter out what could be a misuse case or a solicitation coming from an undesired direction not associated with the principal function.

Indeed, it becomes apparent if only the main strain gauge or only the additional strain gauge is triggered or both at same time. The strength of the signal engendered by the additional strain gauge also tells according which direction the actuation comes.

A strong or relevant signal is received for an actuation according to the additional direction whereas the additional strain gauge can be curved in such a way as to receive weaker signals from the other directions.

In case a misuse is detected, because both the main strain gauge and the additional strain gauge are actuated together, the signals can be considered as unintentional.

Conversely, the additional strain gauge can extend in a planar way and be triggered only according to the additional direction. This alternative construction is simple and the advantage of having the additional strain gauge in proximity to the main strain gauge still applies.

According to a preferred embodiment of the invention, the additional strain gauge comprises a portion extending according to the basis plane.

This provision allows to detect, in addition to the signal from the main strain gauge, an effort applied by the user according to a direction within the basis plane.

Typically, this could be helpful to distinguish between a user applying an effort on the main actuating area according to the main direction and a user gripping the handle or using the handle as a hook for a bag.

Combining the signals from the main strain gauge and from the additional strain gauge helps determining more precisely the user command.

According to a preferred embodiment of the invention, the portion of the additional strain gauge extending according to the basis plane is parallel to the main direction.

Thus, said portion is oriented to detect within the basis plane an elongation or contraction parallel to the main direction.

As an example, this provision is helpful to detect if a user is really trying to actuate the main actuating area. If the signal received by the main strain gauge and the signal received by the additional strain gauge both correspond to an elongation and if the signal from the main strain gauge is more relevant or stronger, it could lead to the conclusion that the command is correct.

Conversely, if the additional strain gauge signal is more relevant or stronger, it possibly means that there is a misuse and that the handle cover is actuated in areas that are not appropriate.

Naturally, depending on the geometry of the car access assembly, the positions and sensitivities of the sensors, other interpretation of both signals could be done.

According to a preferred embodiment of the invention, the support blade includes an additional extension fraction which extends, at least partially, in an inclined manner with respect to the basis plane; the additional strain gauge being at least partially mounted on said additional extension fraction.

The at least partial inclined extension of the additional strain gauge is defined by the geometry of the additional extension fraction with respect to the basis plane.

In other words, the support blade mainly extends according to the basis plane but also has an additional extension fraction which is oriented differently. This provision enables to easily mount the additional strain gauge on the support blade with the right orientation.

According to a preferred embodiment of the invention, the car access assembly includes a flexible circuit board configured to be installed on the support blade and to receive the main strain gauge and the additional strain gauge.

In other words, the flexible circuit board is placed between the support blade on one side and the main strain gauge and additional strain gauge on the other side. This construction simplifies the electrical connection of the main strain gauge and the additional strain gauge to track the signals.

According to a preferred embodiment, the flexible circuit board comprises a connection section configured to be connected to a controlling assembly of the vehicle.

Preferably, the support blade presents a through opening for the passage of the connection section. In particular, the controlling assembly of the vehicle is mounted on the structural support.

According to a preferred embodiment, the car access assembly is provided with a fixation mechanism for being mounted on a corresponding arrangement of the structural support. For example, said fixation mechanism comprises screws and guiding openings for the screws within the support blade.

According to a preferred embodiment of the invention, the support blade includes a main extension fraction which extends, at least partially, in an inclined manner with respect to the basis plane; the main strain gauge being aligned with said main extension fraction according to the main direction.

This geometrical construction reinforces the structure of the support blade and could also serve as a basis element for including other parts within the handle cover. Also, this part can cooperate with the handle cover to transmit the effort of the user by contact with the main actuating area.

According to a preferred embodiment of the invention, the handle cover comprises:
a basis fraction extending according to the basis plane and encompassing at least partially the support blade and
an actuating fraction linked to the basis fraction and extending transversally to the basis fraction, the actuating fraction including the main actuating area and the additional actuating area so as to be capable of being actuated according to or parallel to the main direction and the additional direction.

This provision defines the form of the handle. It appears that the orientation of the actuating fraction enables to more easily transmit the commands to the main strain gauge and the additional strain gauge.

According to this preferred embodiment of the invention, the actuating fraction presents a main edge extending parallel to the basis plane and transversally to the main direction so as to define the main actuating area; and wherein the actuation fraction presents an additional edge extending transversally to the main edge and oriented toward the basis fraction so as to define the additional actuating area.

The handle cover presents a wing form, the transversal part defined by the additional edge being operable as the additional actuating area and the straight part defined by the main edge as the main actuating area.

Preferably, the actuating fraction starting from the main edge is manually operable by a user in parallel to the main direction. Preferably, from the user perspective, a first function is associated when pushing and a second function is associated when pulling.

Preferably, the actuating fraction starting from the additional edge is manually operable by a user transversally to the direction of the additional edge. The user can tap or press the additional edge to actuate a third function. Said direction extending transversally to the additional edge corresponds to the additional direction.

The first function can be an automatic opening command of the vehicle door. The second function can be the opening of the vehicle door so that the user can pull the car door by hand. The third function can be locking and unlocking the vehicle.

The functions can also be reprogrammed by the user thanks to the controlling assembly of the vehicle.

The actuating fraction can include an optional sensing unit configured to be linked to a dedicated part of the flexible circuit board.

The optional sensing unit is then used as redundant sensor(s) to improve the filtering of the signals. The optional sensing unit can include for example a capacitive sensor.

The optional sensing unit can also include a led module, a NFC approach sensor and/or a light guide or courtesy light.

Preferably, the car access assembly comprises a resin configured to fill the gaps between the handle cover and the rest of the inner elements of the car access assembly. This works like a protection glove that renders the car access assembly tight and waterproof.

The present invention also concerns a vehicle door comprising the structural support and the car access assembly as described above, the support blade being mounted on the structural support of the vehicle door, said structural support being part of or being mounted on a pillar of the vehicle door.

As the main strain gauge and the additional strain gauge can be placed in proximity from each other within the handle cover, there is no difficulty to install the car access assembly on the vehicle pillar. In particular, said pillar corresponds to B-pillar or C-pillar.

The invention also concerns a vehicle comprising at least one vehicle door as described above.

The different preferred embodiments defined above that are not incompatible can be combined, as long as the fall under the scope of the appended claims.

### Brief description of the figures

The invention will be better understood with the aid of the detailed description that is set out below with reference to the appended drawing in which:
- figure 1 is a perspective exploded view of a car access assembly;
- figure 2 is a perspective view of the car access assembly;
- figure 3 is a perspective view of a detail of the car access assembly including a support plate;
- figure 4 is a perspective view of another detail of the car access assembly;
- figure 5 is a perspective view of the support plate on which are mounted a flexible circuit board and two strain gauges;
- figure 6 is a perspective view of the support plate and a structural support of the vehicle.

### Description with reference to the figures

In the following detailed description of the figures defined above, the same elements or the elements that are fulfilling identical functions may retain the same references so as to simplify the understanding of the invention.

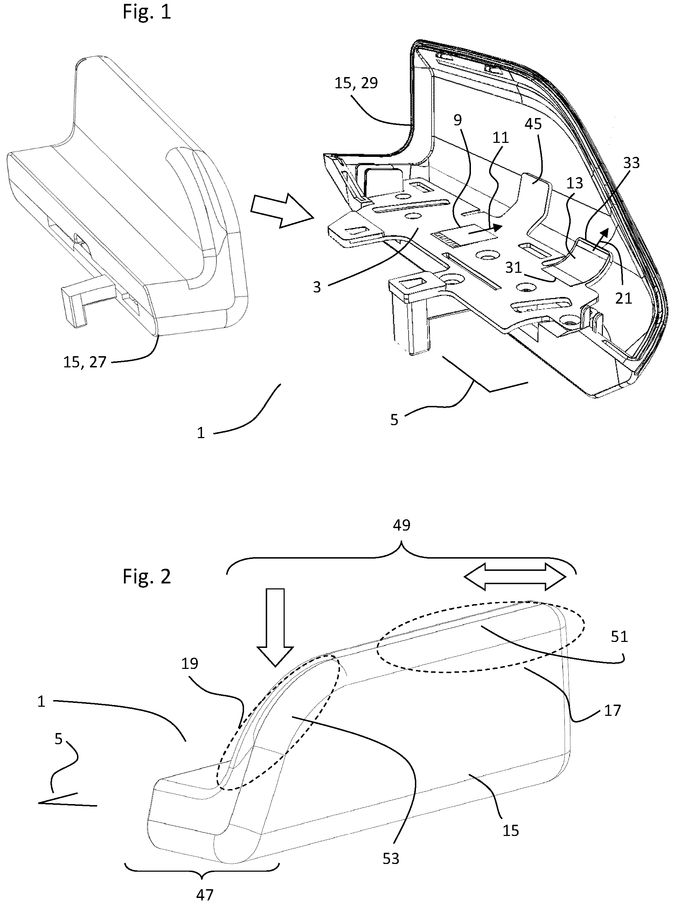

As illustrated in figures 1 to 6, a car access assembly 1 comprises a support blade 3 extending according to a basis plane 5, the support blade 3 being configured to be mounted on a structural support 7 of a vehicle door.

The car access assembly 1 comprises a main strain gauge 9 mounted on the support blade 3 and configured to measure, within the basis plane 5, an elongation or a contraction of the main strain gauge 9 according to a main direction 11.

The car access assembly 1 comprises an additional strain gauge 13 mounted on the support blade 3 in such a way to extend, at least partially, in an inclined manner with respect to the basis plane 5. The additional strain gauge 13 is configured to measure an elongation or a contraction of the additional strain gauge 13.

The car access assembly 1 comprises a handle cover 15 configured to be mounted around the support blade 3, the main strain gauge 9 and the additional strain gauge 13.

As illustrated on figures 1 and 2, the handle cover 15 presents a main actuating area 17 configured to be manually actuated according to or parallel to the main direction 11 for triggering the main strain gauge 9 and an additional actuating area 19 configured to be manually actuated according to or parallel to an additional direction 21, which is transverse to the main direction 11, for triggering the additional strain gauge 13.

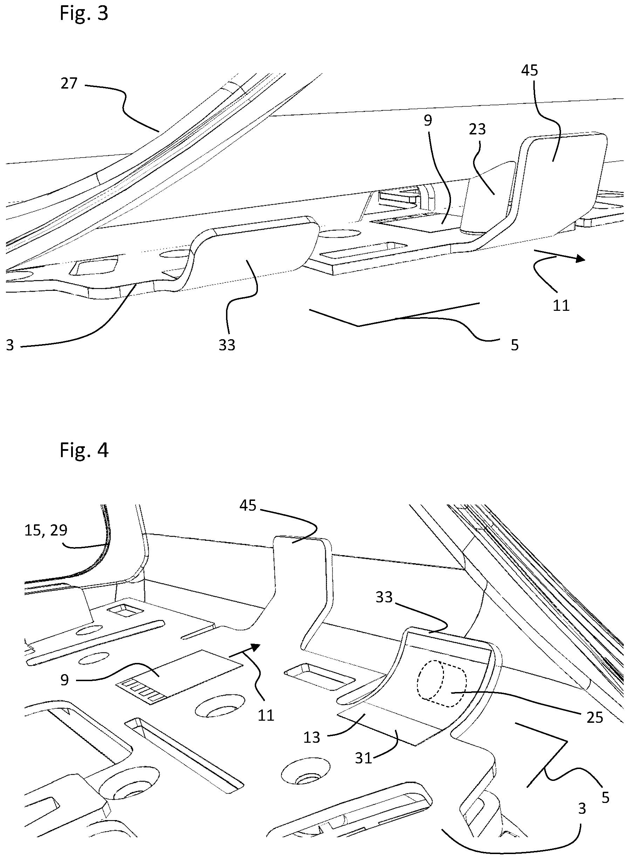

As illustrated in figure 3, the handle cover 15 is provided with a main transmission part 23 that is in contact with the support blade 3 in a region of the support blade 3 which is aligned or merged with the main strain gauge 9 location according to the main direction 11.

The main transmission part 23 is configured to apply a strain on the support blade 3 in such a way to elongate or contract the main strain gauge 9 according to the main direction 11 when the main actuating area 17 is manually actuated according to or parallel to the main direction 11.

This establishes a connection between the manual action of a user on the main actuating area 17 according to the main direction 11 and the triggering of the main stain gauge 9.

Indeed, as the support blade 3 is mounted on the structural support 7 of the vehicle door, it appears that the support blade 3 is maintained in position by the structural support 7 whereas the handle cover 15 is loaded by the user hand. There is therefore a need for a cooperation between the support blade 3 and the handle cover 15 that facilitates the triggering of the main strain gauge 9 to obtain a reliable command.

The main transmission part 23 is a pin extending from the handle cover 15. Said pin extends transversally to the basis plane 5 when the handle cover 15 is mounted around the support blade 3.

The main transmission part 23 is here distant from the main strain gauge 9 according to the main direction 11. In this case, the main transmission part 23 cooperates with a face of the support blade 3 on which is located the main strain gauge 9.

The main strain gauge 9 extends in a planar way in parallel to the basis plane 5.

As illustrated in figure 4, the handle cover 15 is provided with an additional transmission part 25 that is in contact with the support blade 3 in a region of the support blade 3 which is aligned or merged with the additional strain gauge 13 location according to the additional direction 21.

The additional transmission part 25 is configured to apply a strain on the support blade 3 in such a way to elongate or contract the additional strain gauge 13 when the additional actuating area 19 is manually actuated according to or parallel to the additional direction 21.

This links the manual action of a user on the additional actuating area 19 according to the additional direction 21 to the triggering of the additional stain gauge 13.

The additional transmission part 25 is a pin extending from the handle cover 15.

The additional transmission part 25 cooperates with an opposed face of the support blade 3 which is on the other side of the face on which the additional strain gauge 13 is located. In this case, the additional transmission part 25 is under the additional strain gauge 13.

As illustrated in figure 1, the handle cover 15 comprises an upper cover 27 and a lower cover 29 configured to cooperate, for example by including each a corresponding part of a snap-in mechanism. The upper cover 27 includes the main transmission part 23 and the lower cover 29 includes the additional transmission part 25.

The additional strain gauge 13 extends at least partially in a curved way. This enables to trigger the additional strain gauge 13 not only according to the additional direction 21 but also according to other directions that are tangential to the curvature of the additional strain gauge 13.

The perceived signal according to these other directions is more or less important depending on the curvature of the additional strain gauge 13.

The combined effect of the main strain gauge 9 and the additional strain gauge 13 is to capture three dimensional efforts and to eventually filter out what could be a misuse case or a solicitation coming from an undesired direction not associated with the principal function.

Indeed, it becomes apparent if only the main strain gauge 9 or only the additional strain gauge 13 is triggered or both at same time. The strength of the signal engendered by the additional strain gauge 13 also tells according which direction the actuation comes.

A strong or relevant signal is received for an actuation according to the additional direction 21 whereas the additional strain gauge 13 can be curved in such a way as to receive weaker signals for the other directions.

In case a misuse is detected, because both the main strain gauge 9 and the additional strain gauge 13 are actuated together, the signals can be considered as unintentional.

The additional strain gauge 13 comprises a portion 31 extending according to the basis plane 5. It allows to detect, in addition to the signal from the main strain gauge 9, an effort applied by the user according to a direction within the basis plane 5.

Typically, this could be helpful to distinguish between a user applying an effort on the main actuating area 17 according to the main direction 11 and a user gripping the handle or using the handle as a hook for a bag.

Combining the signals from the main strain gauge 9 and from the additional strain gauge 13 helps determining more precisely the user command.

The portion 31 of the additional strain gauge 13 extending according to the basis plane 5 is parallel to the main direction 11.

Thus, said portion 31 is oriented to detect within the basis plane 5 an elongation or contraction parallel to the main direction 11.

As an example, this provision is helpful to detect if a user is really trying to actuate the main actuating area 17. If the signal received by the main strain gauge 9 and the signal received by the additional strain gauge 13 both correspond to an elongation and if the signal from the main strain gauge 9 is more relevant or stronger, it could lead to the conclusion that the command is correct.

Conversely, if the additional strain gauge 13 signal is more relevant or stronger, it possibly means that there is a misuse and that the handle cover is actuated in areas that are not appropriate.

Naturally, depending on the geometry of the car access assembly 1, the positions and sensitivities of the sensors, other interpretation of both signals could be done.

The support blade 3 includes an additional extension fraction 33 which extends, at least partially, in an inclined manner with respect to the basis plane 5; the additional strain gauge 13 being at least partially mounted on said additional extension fraction 33.

The at least partial inclined extension of the additional strain gauge 13 is defined by the geometry of the additional extension fraction 33 with respect to the basis plane 5.

In other words, the support blade 3 mainly extends according to the basis plane 5 but also has an additional extension fraction 33 which is oriented differently. This provision enables to easily mount the additional strain gauge 13 on the support blade 3 with the right orientation.

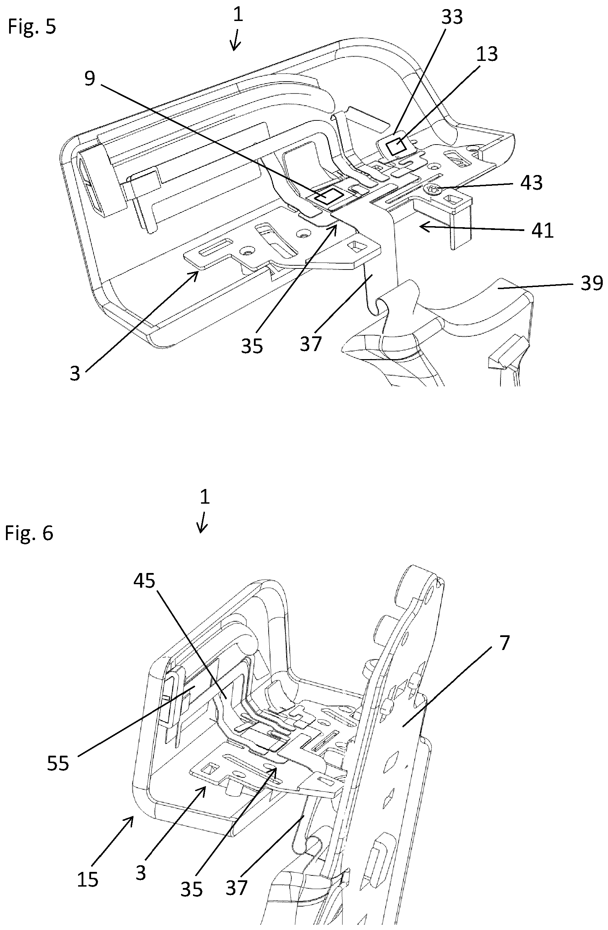

As illustrated in figures 5 and 6, the car access assembly 1 includes a flexible circuit board 35 configured to be installed on the support blade 3 and to receive the main strain gauge 9 and the additional strain gauge 13.

In other words, the flexible circuit board 35 is placed between the support blade 3 on one side and the main strain gauge 9 and additional strain gauge 13 on the other side.

The flexible circuit board 35 comprises a connection section 37 configured to be connected to a controlling assembly 39 of the vehicle.

The support blade 3 presents a through opening 41 for the passage of the connection section 37. The controlling assembly 39 of the vehicle is mounted on the structural support 7.

The car access assembly 37 is provided with a fixation mechanism 43 for being mounted on a corresponding arrangement of the structural support 7. For example, said fixation mechanism 43 comprises screws and guiding openings for the screws within the support blade 3.

The support blade 3 includes a main extension fraction 45 which extends, at least partially, in an inclined manner with respect to the basis plane 5; the main strain gauge 9 being aligned with said main extension fraction 45 according to the main direction 11.

As illustrated in figure 2, functionally, the handle cover 15 comprises a basis fraction 47 extending according to the basis plane 5 and encompassing at least partially the support blade 3.

The handle cover 15 also comprises an actuating fraction 49 linked to the basis fraction 47 and extending transversally to the basis fraction 47, the actuating fraction 49 including the main actuating area 17 and the additional actuating area 19 so as to be capable of being actuated according to or parallel to the main direction 11 and the additional direction 21.

The actuating fraction 49 presents a main edge 51 extending parallel to the basis plane 5 and transversally to the main direction 11 so as to define the main actuating area 17.

The actuation fraction 49 also presents an additional edge 53 extending transversally to the main edge 51 and oriented toward the basis fraction 47 so as to define the additional actuating area 19.

The handle cover 15 presents a wing form, the transversal part defined by the additional edge 53 and the straight part defined by the main edge 51.

The actuating fraction 49 starting from the main edge 51 is manually operable by a user in parallel to the main direction 11. From the user perspective, a first function is associated when pushing and a second function is associated when pulling.

The actuating fraction 49 starting from the additional edge 53 is manually operable by a user transversally to the direction of the additional edge 53. The user can tap or press the additional edge 53 to actuate a third function. Said direction extending transversally to the additional edge 53 corresponds to the additional direction 21.

The first function can be an automatic opening command of the vehicle door. The second function can be the opening of the vehicle door so that the user can pull the car door by hand. The third function can be locking and unlocking the vehicle.

The functions can also be reprogrammed by the user thanks to the controlling assembly 39 of the vehicle.

As illustrated in figures 5 and 6, the actuating fraction 49 can include an optional sensing unit 55 configured to be linked to a dedicated part of the flexible circuit board 35.

The optional sensing unit 55 is then used as redundant sensor(s) to improve the filtering of the signals. The optional sensing unit 55 can include for example a capacitive sensor.

The optional sensing unit 55 can also include a led module, a NFC approach sensor and/or a light guide or courtesy light.

The car access assembly 1 comprises a resin configured to fill the gaps between the handle cover and the rest of the inner elements of the car access assembly 1. This works like a protection glove that renders the car access assembly 1 tight and resistant.

The obtained vehicle door comprises the structural support 7 and the car access assembly 1 as described, the support blade 3 being mounted on the structural support 7 of the vehicle door, said structural support 7 being part of or being mounted on a pillar of the vehicle door.

As the main strain gauge 9 and the additional strain gauge 13 can be placed in proximity from each other within the handle cover 15, there is no difficulty to install the car access assembly 1 on the vehicle pillar. In particular, said pillar corresponds to B-pillar or C-pillar.

A vehicle can then comprise several vehicle doors as described above.

The described vehicle handles have different commands integrated in a small place and can have a clean design. Indeed, the respective orientations of the main strain gauge 9 and the additional strain gauge 13 facilitate the interpretation of the measured signals. There is less risk to have measured signals that could lead to a doubt of the actuating area which is really used.

As goes without saying, the invention is not limited to the sole embodiment described above by way of example, it encompasses all the variants, as long as they fall under the scope of the appended claims.

## Claims

1. Car access assembly (1) comprising :
- a support blade (3) extending according to a basis plane (5), the support blade (3) being configured to be mounted on a structural support (7) of a vehicle door,
- a main strain gauge (9) mounted on the support blade (3) and configured to measure, within the basis plane (5), an elongation or a contraction of the main strain gauge (9) according to a main direction (11),
- an additional strain gauge (13) mounted on the support blade (3) in such a way to extend, at least partially, in an inclined manner with respect to the basis plane (5), the additional strain gauge (13) being configured to measure an elongation or a contraction of the additional strain gauge (13),
- a handle cover (15) configured to be mounted around the support blade (3), the main strain gauge (9) and the additional strain gauge (13); the handle cover (15) presenting a main actuating area (17) configured to be manually actuated according to or parallel to the main direction (11) for triggering the main strain gauge (9) and an additional actuating area (19) configured to be manually actuated according to or parallel to an additional direction (21), which is transverse to the main direction (11), for triggering the additional strain gauge (13).

2. Car access assembly (1) according to claim 1, wherein the handle cover (15) is provided with a main transmission part (23) that is in contact with the support blade (3) in a region of the support blade (3) which is aligned or merged with the main strain gauge (9) location according to the main direction (11), the main transmission part (23) being configured to apply a strain on the support blade (3) in such a way to elongate or contract the main strain gauge (9) according to the main direction (11) when the main actuating area (17) is manually actuated according to or parallel to the main direction (11).

3. Car access assembly (1) according to one of the claims 1 or 2, wherein the main strain gauge (9) extends in a planar way in parallel to the basis plane (5).

4. Car access assembly (1) according to one of the claims 1 to 3, wherein the handle cover (15) is provided with an additional transmission part (25) that is in contact with the support blade (3) in a region of the support blade (3) which is aligned or merged with the additional strain gauge (13) location according to the additional direction (21), the additional transmission part (25) being configured to apply a strain on the support blade (3) in such a way to elongate or contract the additional strain gauge (13) when the additional actuating area (19) is manually actuated according to or parallel to the additional direction (21).

5. Car access assembly (1) according to one of the claims 1 to 4, wherein the additional strain gauge (13) extends at least partially in a curved way.

6. Car access assembly (1) according to claim 5, wherein the additional strain gauge (13) comprises a portion (31) extending according to the basis plane (5).

7. Car access assembly (1) according to claim 6, wherein the portion (31) of the additional strain gauge (13) extending according to the basis plane (5) is parallel to the main direction (11).

8. Car access assembly (1) according to one of the claims 1 to 7, wherein the support blade (3) includes an additional extension fraction (33) which extends, at least partially, in an inclined manner with respect to the basis plane (5); the additional strain gauge (13) being at least partially mounted on said additional extension fraction (33).

9. Car access assembly (1) according to one of the claims 1 to 8, including a flexible circuit board (35) configured to be installed on the support blade (3) and to receive the main strain gauge (9) and the additional strain gauge (13).

10. Car access assembly (1) according to one of the claims 1 to 9, wherein the support blade (3) includes a main extension fraction (45) which extends, at least partially, in an inclined manner with respect to the basis plane (5); the main strain gauge (9) being aligned with said main extension fraction (45) according to the main direction (11).

11. Car access assembly (1) according to one of the claims 1 to 10, wherein the handle cover (15) comprises:
- a basis fraction (47) extending according to the basis plane (5) and encompassing at least partially the support blade (3) and
- an actuating fraction (49) linked to the basis fraction (47) and extending transversally to the basis fraction (47), the actuating fraction (49) including the main actuating area (17) and the additional actuating area (19) so as to be capable of being actuated according to or parallel to the main direction (11) and the additional direction (21).

12. Car access assembly (1) according to claim 11, wherein the actuating fraction (49) presents a main edge (51) extending parallel to the basis plane (5) and transversally to the main direction (11) so as to define the main actuating area (17); and wherein the actuation fraction (49) presents an additional edge (53) extending transversally to the main edge (51) and oriented toward the basis fraction (47) so as to define the additional actuating area (19).

13. Vehicle door comprising the structural support (7) and the car access assembly (1) to one of the claims 1 to 12, the support blade (3) being mounted on the structural support (7) of the vehicle door, said structural support (7) being part of or being mounted on a pillar of the vehicle door.

## Patentansprüche

1. Autozugangsbaugruppe (1), die Folgendes umfasst:
- eine Trägerplatte (3), die sich gemäß einer Basisebene (5) erstreckt, wobei die Trägerplatte (3) so konfiguriert ist, dass sie an einem Strukturträger (7) einer Fahrzeugtür montiert ist,
- einen Hauptdehnungsmessstreifen (9), der an der Trägerplatte (3) montiert und so konfiguriert ist, dass er innerhalb der Basisebene (5) eine Dehnung oder eine Kontraktion des Hauptdehnungsmessstreifens (9) entsprechend einer Hauptrichtung (11) misst,
- einen zusätzlichen Dehnungsmessstreifen (13), der derart an der Trägerplatte (3) montiert ist, dass er sich mindestens teilweise schräg in Bezug auf die Basisebene (5) erstreckt, wobei der zusätzliche Dehnungsmessstreifen (13) so konfiguriert ist, dass er eine Dehnung oder eine Kontraktion des zusätzlichen Dehnungsmessstreifens (13) misst,
- eine Griffabdeckung (15), die so konfiguriert ist, dass sie um die Trägerplatte (3), den Hauptdehnungsmessstreifen (9) und den zusätzlichen Dehnungsmessstreifen (13) montiert wird; wobei die Griffabdeckung (15) einen Hauptbetätigungsbereich (17), der so konfiguriert ist, dass er entsprechend der Hauptrichtung (11) oder parallel zu dieser manuell betätigt werden kann, um den Hauptdehnungsmessstreifen (9) auszulösen, und einen zusätzlichen Betätigungsbereich (19) aufweist, der so konfiguriert ist, dass er entsprechend einer zusätzlichen Richtung (21) oder parallel zu dieser, die quer zur Hauptrichtung (11) ist, manuell betätigt werden kann, um den zusätzlichen Dehnungsmessstreifen (13) auszulösen.

2. Autozugangsbaugruppe (1) nach Anspruch 1, wobei die Griffabdeckung (15) mit einem Hauptübertragungsteil (23) versehen ist, das mit der Trägerplatte (3) in einem Bereich der Trägerplatte (3) in Kontakt steht, der entsprechend der Hauptrichtung (11) mit der Position des Hauptdehnungsmessstreifens (9) ausgerichtet oder verbunden ist, wobei das Hauptübertragungsteil (23) so konfiguriert ist, dass es eine Dehnung auf die Trägerplatte (3) ausübt, um den Hauptdehnungsmessstreifen (9) entsprechend der Hauptrichtung (11) zu dehnen oder zusammenzuziehen, wenn der Hauptbetätigungsbereich (17) entsprechend der Hauptrichtung (11) oder oder parallel zu dieser manuell betätigt wird.

3. Autozugangsbaugruppe (1) nach einem der Ansprüche 1 oder 2, wobei sich der Hauptdehnungsmessstreifen (9) planar parallel zur Basisebene (5) erstreckt.

4. Autozugangsbaugruppe (1) nach einem der Ansprüche 1 bis 3, wobei die Griffabdeckung (15) mit einem zusätzlichen Übertragungsteil (25) versehen ist, das mit der Trägerplatte (3) in einem Bereich der Trägerplatte (3) in Kontakt steht, der entsprechend der zusätzlichen Richtung (21) mit der Position des zusätzlichen Dehnungsmessstreifens (13) ausgerichtet oder verbunden ist, wobei das zusätzliche Übertragungsteil (25) so konfiguriert ist, dass es eine Dehnung auf die Trägerplatte (3) ausübt, so dass sich der zusätzliche Dehnungsmessstreifen (13) dehnt oder zusammenzieht, wenn der zusätzliche Betätigungsbereich (19) entsprechend der zusätzlichen Richtung (21) oder parallel zu dieser manuell betätigt wird.

5. Autozugangsbaugruppe (1) nach einem der Ansprüche 1 bis 4, wobei sich der zusätzliche Dehnungsmessstreifen (13) mindestens teilweise gekrümmt erstreckt.

6. Autozugangsbaugruppe (1) nach Anspruch 5, wobei der zusätzliche Dehnungsmessstreifen (13) einen Abschnitt (31) umfasst, der sich entsprechend der Basisebene (5) erstreckt.

7. Autozugangsbaugruppe (1) nach Anspruch 6, wobei der Abschnitt (31) des zusätzlichen Dehnungsmessstreifens (13), der sich entsprechend der Basisebene (5) erstreckt, parallel zur Hauptrichtung (11) verläuft.

8. Autozugangsbaugruppe (1) nach einem der Ansprüche 1 bis 7, wobei die Trägerplatte (3) einen zusätzlichen Verlängerungsanteil (33) enthält, der sich mindestens teilweise schräg in Bezug auf die Basisebene (5) erstreckt, wobei der zusätzliche Dehnungsmessstreifen (13) mindestens teilweise an dem zusätzlichen Verlängerungsanteil (33) montiert ist.

9. Autozugangsbaugruppe (1) nach einem der Ansprüche 1 bis 8, die eine flexible Leiterplatte (35) enthält, die so konfiguriert ist, dass sie auf der Trägerplatte (3) installiert ist und den Hauptdehnungsmessstreifen (9) und den zusätzlichen Dehnungsmessstreifen (13) aufnimmt.

10. Autozugangsbaugruppe (1) nach einem der Ansprüche 1 bis 9, wobei die Trägerplatte (3) einen Hauptverlängerungsanteil (45) enthält, der sich mindestens teilweise schräg in Bezug auf die Basisebene (5) erstreckt; wobei der Hauptdehnungsmessstreifen (9) mit dem Hauptverlängerungsanteil (45) entsprechend der Hauptrichtung (11) ausgerichtet ist.

11. Autozugangsbaugruppe (1) nach einem der Ansprüche 1 bis 10, wobei die Griffabdeckung (15) Folgendes umfasst:
- einen Basisanteil (47), der sich entsprechend der Basisebene (5) erstreckt und mindestens teilweise die Trägerplatte (3) umschließt, und
- einen Betätigungsanteil (49), der mit dem Basisanteil (47) verbunden ist und sich quer zu dem Basisanteil (47) erstreckt, wobei der Betätigungsanteil (49) den Hauptbetätigungsbereich (17) und den zusätzlichen Betätigungsbereich (19) enthält, so dass er entsprechend der Hauptrichtung (11) und der zusätzlichen Richtung (21) oder parallel zu diesen betätigt werden kann.

12. Autozugangsbaugruppe (1) nach Anspruch 11, wobei der Betätigungsanteil (49) eine Hauptkante (51) aufweist, die sich parallel zur Basisebene (5) und quer zur Hauptrichtung (11) erstreckt, um den Hauptbetätigungsbereich (17) zu definieren; und wobei der Betätigungsanteil (49) eine zusätzliche Kante (53) aufweist, die sich quer zur Hauptkante (51) erstreckt und zu dem Basisanteil (47) hin ausgerichtet ist, um den zusätzlichen Betätigungsbereich (19) zu definieren.

13. Fahrzeugtür, die den Strukturträger (7) und die Autozugangsbaugruppe (1) nach einem der Ansprüche 1 bis 12 umfasst, wobei die Trägerplatte (3) an dem Strukturträger (7) der Fahrzeugtür montiert ist, wobei der Strukturträger (7) Teil einer Säule der Fahrzeugtür ist oder an einer solchen montiert ist.

## Revendications

1. Ensemble d'accès pour voiture (1) comprenant :
- une lame de support (3) s'étendant selon un plan de base (5), la lame de support (3) étant configurée pour être montée sur un support structurel (7) d'une portière de véhicule,
- une jauge de contrainte principale (9) montée sur la lame de support (3) et configurée pour mesurer, dans le plan de base (5), un allongement ou une contraction de la jauge de contrainte principale (9) selon une direction principale (11),
- une jauge de contrainte supplémentaire (13) montée sur la lame de support (3) de manière à s'étendre, au moins partiellement, de manière inclinée par rapport au plan de base (5), la jauge de contrainte supplémentaire (13) étant configurée pour mesurer un allongement ou une contraction de la jauge de contrainte supplémentaire (13),
- un couvercle de poignée (15) configuré pour être monté autour de la lame de support (3), de la jauge de contrainte principale (9) et de la jauge de contrainte supplémentaire (13) ; le couvercle de poignée (15) présentant une zone d'actionnement principale (17) configurée pour être actionnée manuellement selon ou parallèlement à la direction principale (11) pour déclencher la jauge de contrainte principale (9) et une zone d'actionnement supplémentaire (19) configurée pour être actionnée manuellement selon ou parallèlement à une direction supplémentaire (21), qui est transversale à la direction principale (11), pour déclencher la jauge de contrainte supplémentaire (13).

2. Ensemble d'accès pour voiture (1) selon la revendication 1, dans lequel le couvercle de poignée (15) est pourvu d'une partie de transmission principale (23) qui est en contact avec la lame de support (3) dans une région de la lame de support (3) qui est alignée ou fusionnée avec l'emplacement de jauge de contrainte principale (9) selon la direction principale (11), la partie de transmission principale (23) étant configurée pour appliquer une contrainte sur la lame de support (3) de manière à allonger ou contracter la jauge de contrainte principale (9) selon la direction principale (11) lorsque la zone d'actionnement principale (17) est actionnée manuellement selon ou parallèlement à la direction principale (11).

3. Ensemble d'accès pour voiture (1) selon l'une des revendications 1 ou 2, dans lequel la jauge de contrainte principale (9) s'étend de manière plane, parallèlement au plan de base (5).

4. Ensemble d'accès pour voiture (1) selon l'une des revendications 1 à 3, dans lequel le couvercle de poignée (15) est pourvu d'une partie de transmission supplémentaire (25) qui est en contact avec la lame de support (3) dans une région de la lame de support (3) qui est alignée ou fusionnée avec l'emplacement de jauge de contrainte supplémentaire (13) selon la direction supplémentaire (21), la partie de transmission supplémentaire (25) étant configurée pour appliquer une contrainte sur la lame de support (3) de manière à allonger ou contracter la jauge de contrainte supplémentaire (13) lorsque la zone d'actionnement supplémentaire (19) est actionnée manuellement selon ou parallèlement à la direction supplémentaire (21).

5. Ensemble d'accès pour voiture (1) selon l'une des revendications 1 à 4, dans lequel la jauge de contrainte supplémentaire (13) s'étend au moins partiellement de manière incurvée.

6. Ensemble d'accès pour voiture (1) selon la revendication 5, dans lequel la jauge de contrainte supplémentaire (13) comprend une partie (31) s'étendant selon le plan de base (5).

7. Ensemble d'accès pour voiture (1) selon la revendication 6, dans lequel la partie (31) de la jauge de contrainte supplémentaire (13) s'étendant selon le plan de base (5) est parallèle à la direction principale (11).

8. Ensemble d'accès pour voiture (1) selon l'une des revendications 1 à 7, dans lequel la lame de support (3) comprend une fraction d'extension supplémentaire (33) qui s'étend, au moins partiellement, de manière inclinée par rapport au plan de base (5) ; la jauge de contrainte supplémentaire (13) étant au moins partiellement montée sur ladite fraction d'extension supplémentaire (33).

9. Ensemble d'accès pour voiture (1) selon l'une des revendications 1 à 8, comprenant une carte de circuit imprimé flexible (35) configurée pour être installée sur la lame de support (3) et recevoir la jauge de contrainte principale (9) et la jauge de contrainte supplémentaire (13).

10. Ensemble d'accès pour voiture (1) selon l'une des revendications 1 à 9, dans lequel la lame de support (3) comprend une fraction d'extension principale (45) qui s'étend, au moins partiellement, de manière inclinée par rapport au plan de base (5) ; la jauge de contrainte principale (9) étant alignée avec ladite fraction d'extension principale (45) selon la direction principale (11).

11. Ensemble d'accès pour voiture (1) selon l'une des revendications 1 à 10, dans lequel le couvercle de poignée (15) comprend :
- une fraction de base (47) s'étendant selon le plan de base (5) et englobant au moins partiellement la lame de support (3) et
- une fraction d'actionnement (49) reliée à la fraction de base (47) et s'étendant transversalement à la fraction de base (47), la fraction d'actionnement (49) comprenant la zone d'actionnement principale (17) et la zone d'actionnement supplémentaire (19) de manière à pouvoir être actionnée selon ou parallèlement à la direction principale (11) et à la direction supplémentaire (21).

12. Ensemble d'accès pour voiture (1) selon la revendication 11, dans lequel la fraction d'actionnement (49) présente un bord principal (51) s'étendant parallèlement au plan de base (5) et transversalement à la direction principale (11) de manière à définir la zone d'actionnement principale (17) ; et dans lequel la fraction d'actionnement (49) présente un bord supplémentaire (53) s'étendant transversalement au bord principal (51) et orienté vers la fraction de base (47) de manière à définir la zone d'actionnement supplémentaire (19).

13. Portière de véhicule comprenant le support structurel (7) et l'ensemble d'accès pour voiture (1) selon l'une des revendications 1 à 12, la lame de support (3) étant montée sur le support structurel (7) de la portière de véhicule, ledit support structurel (7) faisant partie de ou étant monté sur un montant de la portière de véhicule.
